# EUROPEAN PATENT APPLICATION

(11) **EP 2 945 064 A1**
(43) Date of publication of application: **18.11.2015**
(21) Application number: 13870718.7
(22) Date of filing: 15.08.2013
(51) Int. Cl.: G06F 9/50

(54) **METHOD AND MOBILE DEVICE FOR APPLICATION AUTOMATICALLY ADAPTING TO MODE OF MULTI-CORE PROCESSOR**

(30) Priority: 10.01.2013 CN 201310008954
(71) Applicant: Huizhou TCL Mobile Communication Co., Ltd., Huizhou, Guangdong 516006 (CN)
(72) Inventor: YE, Dawei, Huizhou Guangdong 516006 (CN)
(74) Representative: Isarpatent
(86) International application number: PCT/CN2013/081578
(87) International publication number: WO 2014/107958

(57) **Abstract**

The present invention provides a mobile device adopting multicore processors in which each of multiple applications are automatically configured in corresponding processing modes stored in an established table. When one of the application is operated, looking up the table to select the corresponding processing mode. The mobile device automatically switches to the corresponding processing mode. Since the cores in the processor are allocated according to demands, the speed of processing and the power consumption get balanced.

## Description

### 1. Field of the Invention

The present invention relates to the field of mobile devices, and more particularly, to a method for automatically adapting an application to a suitable multicore processing mode and a mobile device adopting the method.

### 2. Description of the Prior Art

More and more smart phones are equipped with a multi-core processor, such as a dual-core or quad-core processor, since the performance of processors for smart phones improve greatly.

A multi-core processor deals with data as well. Take a dual-core processor for example. To finish two arithmetic operations, a mono-core processor deals with one arithmetic operation and the other arithmetic operation subsequently.

The application in the multi-core processor in a cellphone is in the multi-core mode as being at default according to the convention technology. But, the multi-core processor consumes more power than the mono-core processor does, which causing the standby time of the cellphone to be shortened. It matters for the mobile device in reduction of power consumption. For some of the applications installed in the cellphone, such as the application for webpage, the speed of surfing the webpage is no1t determined by the speed of the processor. Instead, the speed of surfing the webpage is determined by the speed of Internet. It means that the some of the applications, such as the application for webpage, should be better to be processed in the mono-core processing mode. Power consumption can be reduced. However, it may cause inconvenience to the users of the cellphone once the users find it is hard to determine which application in the mono-core processing mode and which application in the multi-core processing mode. It may also bother the users since the operation of switching the processing mode of the processor is a bit complicated.

It seems that the conventional technology has room to be improved.

### SUMMARY OF THE INVENTION

An object of the present invention is to provide a method for automatically adapting an application to a multicore processing mode and a mobile device adopting the method for solving the problem occurring in the present invention. The present invention proposes an analysis of algorithm corresponding to the utilization of the system in the running application. The multi-core processor is asked to run different modes corresponding to different applications based in the result of analysis. It helps to more effectively manage power consumed by the mobile device.

According to the present invention, a method for automatically adapting an application to a suitable multicore processing mode is provided. The method comprises:
corresponding to a processing mode of a processor based on an utilization of a system in a running application, and storing a one-to-one relationship between the application and the corresponding processing mode of the processor to a preformed table;
looking up the processing mode in the table when the application is found to run in a mobile device, and the processing mode of the processor comprising a mono-core mode and a multi-core mode;
controlling the mobile device to switch to the mono-core mode if the processing mode of the processor which the application corresponds to is the mono-core mode and loading the application to a memory of the mobile device; and
controlling the mobile device to switch to the multi-core mode if the processing mode of the processor which the application corresponds to is the multi-core mode and loading the application to the memory of the mobile device.

According to the present invention, a method for automatically adapting an application to a suitable multicore processing mode is provided. The method comprises:
allocating a corresponding processing mode of the processor to the application in a mobile device in advance, and storing a one-to-one relationship between the application and the corresponding processing mode of the processor to a preformed table;
looking up the processing mode of the processor which the application corresponds to when the application runs in the mobile device; and
controlling the mobile device to switch to the processing mode of the processor which the application corresponds to based on the looked-up processing mode of the processor which the application corresponds to, and loading the application after the switch wherein the processing mode of the processor corresponds to different numbers of cores in the processor.

According to the present invention, a mobile device for automatically adapting an application to a suitable multicore processing mode is provided. The mobile device comprises:
an allocation module, for allocating a corresponding processing mode of the processor to the application in a mobile device in advance, and storing a one-to-one relationship between the application and the corresponding processing mode of the processor to a preformed table;
a look-up module, for looking up the processing mode of the processor which the application corresponds to when the application runs in the mobile device; and
a controlling module, for controlling the mobile device to switch to the processing mode of the processor which the application corresponds to based on the looked-up processing mode of the processor which the application corresponds to, and loading the application after the switch wherein the processing mode of the processor corresponds to different numbers of cores in the processor.

According to the present invention, a storage medium, storing a plurality of instructions executable by a processor to finish operations of
allocating an application to a corresponding processing mode of the processor in advance and storing a one-to-one relationship between the application and the corresponding processing mode of the processor to a preformed table;
looking up the processing mode of the processor which the application corresponds to when the application runs in a mobile device; and
controlling the mobile device to switch to the processing mode of the processor which the application corresponds to based on the looked-up processing mode of the processor which the application corresponds to, loading the application after the switch, and the processing mode of the processor corresponding to different numbers of cores in the processor.

The present invention provides a method for automatically adapting an application to a multicore processing mode and a mobile device adopting the method. The utilization of the system in the running application is counted and analyzed. A suitable processing mode of the processor is automatically allocated to each of the applications. The multi-core processor is asked to allocate different cores to different applications. Since the cores in the processor are allocated according to demands, the speed of processing and the power consumption get balanced. Thus, power consumption generated by the mobile device with the multi-core processor is successfully optimized. The mobile device is also equipped with new functions. The processor automatically switches in the mono-core mode (more economical) and in the multi-core mode (more highly-performed) for different applications. The processing mode of each of the applications is automatically optimized. The process of the system operates and finishes automatically as well. Since the users do not need to operate manually, it is very convenient for the users.

### BRIEF DESCRIPTION OF THE DRAWINGS

Fig. 1 shows a flow chart of a method for automatically adapting an application to a suitable multicore processing mode according to a preferred embodiment of the present invention.
Fig. 2 shows a flowchart of analyzing a utilization of a system adopting the method for automatically adapting an application to a suitable multicore processing mode according to a preferred embodiment of the present invention.
Fig. 3 shows a block diagram of a mobile device according to a preferred embodiment.
Fig. 4 shows a block diagram of an allocation module of the mobile device according to a preferred embodiment.
Fig. 5 shows a block diagram of a controlling module of the mobile device according to a preferred embodiment.

### DETAILED DESCRIPTION OF THE PREFERRED EMBODIMENTS

Please refer to figures. Components with the same labels mean that they are the same. The principle of the present invention is elaborated in a suitable operating environment. The elaboration of the context in the following is according to the preferable embodiments of the present invention. The elaboration of the context does not confine the present invention comprising other embodiments which are not elaborated here.

Basically, steps and labels used in the context about the embodiments of the present invention refer to steps executed in one or multiple computers; otherwise, additional introductions are provided. Thus, the execution of these steps and operations will be mentioned several times in the context. The execution of the computer described in the context comprises a processing unit of electrical data in a structured type. The execution converts the data or keeps the data in a memory of the computer. The data can be rearranged. Or, those skilled in the art can change the operation of the computer based on their knowledge. The data structure of the data is the concrete location in the memory. The data structure of the data has a specific characteristic defined by the data format. However, the description of the principle of the present invention is not to restrict the present invention. It is easy for those skilled in the art to understand that the various steps and operations in the context can also be realized in hardware.

The principle of the present invention absorbs many other general or specific calculations, communicative environments, or configurations for realization. The calculation system, communicative environment, and configuration can be used (but not limited) in devices such as portable phones, personal computers (PCs), servers, multiprocessor systems, microcomputer-based systems, main frame computers, and distributed calculative environments. Besides, the calculation system, communicative environment, and configuration can be used (but not limited) in any system or equipment comprising devices mentioned above.

The term "module" used in the context can be regarded as an operating software object in the arithmetic system. The different components, modules, engines, and services described in the context can be taken as operated objects in the arithmetic system. The mobile device and the method proposed by the present invention preferably match software. Surely, the mobile device and the method proposed by the present invention can match hardware. The present invention covers both of software and hardware.

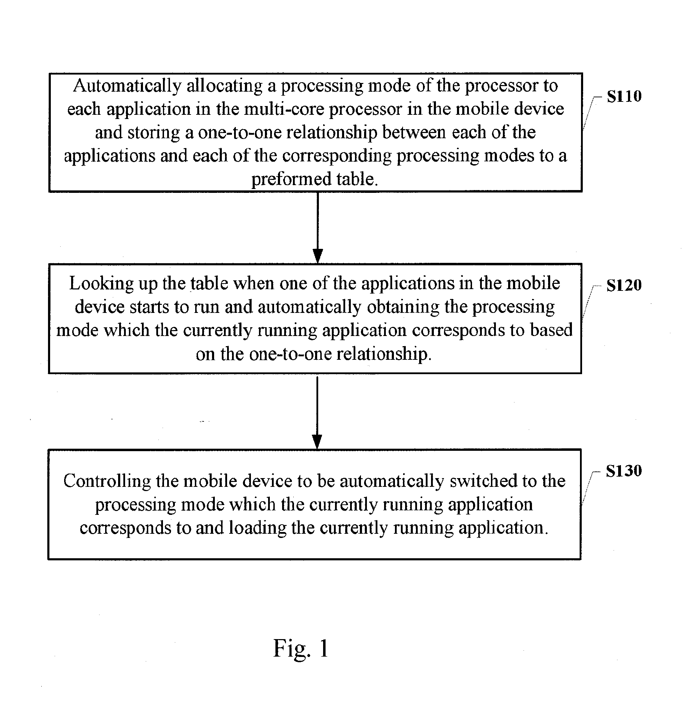

Please refer to Fig. 1 showing a flow chart of a method for automatically adapting an application to a suitable multicore processing mode according to a first embodiment of the present invention. The method comprises following steps of:
Step S110: Automatically allocating a processing mode of the processor to each application in the multi-core processor in the mobile device and storing a one-to-one relationship between each of the applications and each of the corresponding processing modes to a preformed table. Each of the processing modes corresponds to different numbers of cores.

The mobile device may be a desktop computer (DTC) or may be a terminal comprising a storage unit and a microprocessor for computing such as a notebook computer, a workstation, a palmtop computer, an ultra mobile personal computer (UMPC), a tablet personal computer (tablet PC), a personal digital assistant (PDA), a web pad, and a portable telephone.

When the embodiment carries out, a table is established in the multi-core processor in advance for storing all of the applications in the multi-core processor and cores allocated to each of the applications. All of the applications in the mobile device set the processing mode as the multi-core mode by default. Take a mobile device with a quad-core processor for example. All of the applications in the mobile device with a quad-core processor set the processing mode as the quad-core mode by default.

Step S120: Looking up the table when one of the applications in the mobile device starts to run and automatically obtaining the processing mode which the currently running application corresponds to based on the one-to-one relationship.

Whenever a user runs an application or a user switches a task to a dormant application, the user visits the table before the application is loaded for obtaining a corresponding processing mode to the application.
Step S130: Controlling the mobile device to be automatically switched to the processing mode which the currently running application corresponds to. After the mobile device is successfully switched, load the currently running application. If the currently running application is set as a multi-core mode in the table, the processing mode is switched to the multi-core mode automatically for achieving the processing speed which a procedure needs. If the currently running application is set as a mono-core mode in the table, the processing mode is switched to the mono-core mode automatically for saving energy. After the processing mode is successfully switched, load the currently running application to the memory.

When the embodiment carries out, the processor operates in different modes (mono-core, dual-core, or multi-core mode) according to an application programming interface (API) installed in a call system. A manufacturer of processors defines its API freely for its call system and creates a respective API freely for its call system. No specific limitations are suggested in the present invention.

In addition, the user does not need to choose or arrange automatically since the operational system of the mobile device analyzes the utilization of the system in the running application and allocates a suitable processing mode of the processor to each of the applications based on the result of analysis in the present embodiment providing a method for automatically adapting an application to a suitable multi-core processing mode. The utilization of the system can reflect the utilization of the central process unit (CPU) in the mobile device in the running application or the loading of the system. In the present embodiment, the utilization of the branch system of the CPU is sampled several times through the API function of the call system in corresponding times in the running application (the platform of the multi-core processor generally provides the function of the reflects the utilization of the CPU, the unit is percent, 100% represents that the utilization of the multi-core CPU is 100%, and 50% represents that the multi-core CPU does not process one 50% of counting). When the corresponding application stops running, the sampled utilizations of the branch system of the CPU are equalized and an equalized value is obtained. The loading of the system in the running application is analyzed based on the equalized value for giving a suitable processing mode of the processor to the application.

In addition, the average value of the utilization of the CPU cannot accurately reflect the loading of the system if the utilization of the CPU is sampled at a very low point. Every average value of the utilization of the CPU as the application runs each time is recorded after the application repeats N times. Then, an N number of average values of the utilization of the CPU are counted, which is called an average process, for obtaining a statistic which more accurately reflects the loading of the system as the application runs. The statistic is used as the utilization of the system as the application runs. Especially, it effectively helps reduce deviation of the sampling point once the value of N is larger. Real values can be set based on real conditions.

Further, concrete steps of judging the most suitable processing mode of the processor for the application based on the utilization of the system in the running application comprise: comparing the utilization of the system in the running application with a predetermined threshold each to each; provided that a threshold K is predetermined, the utilization of the system in the running application will be smaller than and equal to the threshold K, which implies that the loading of the system in the running application is not large, the multi-core processing mode is unnecessary, and the processing mode of the processor which the application corresponds to is set as the mono-core mode; provided that a threshold K is predetermined, the utilization of the system in the running application will be larger than and equal to the threshold K, which implies that the loading of the system in the running application is larger, and the processing mode of the processor which the application corresponds to should be set as the multi-core processing mode; after all of the applications obtain a suitable processing mode, the processing mode of the processor which the application corresponds to in the table is correspondingly adjusted; the threshold K being set according to real conditions such as 50%.

In another embodiment, a plurality of thresholds are also used for subdividing the processing mode in a quad-core or multi-core processor. Take a quad-core processor for Tegra3 of Nvidia for example. The Tegra3 processor operates in the mono-core, dual-core, and quad-core modes. Two thresholds, K1 and K2, are used. The threshold K1 is smaller than the threshold K2. For example, the thresholds K1 and K2 are set as 25% and 75%, respectively. When the utilization of the system in the running application is smaller than and equal to the threshold K1, 75% of the processing is idle. It means that the application is better to be in the mono-core mode, and the processing mode which the application corresponds to should be changed to the mono-core mode, for example, an e-mail writing process. When the utilization of the system in the running application is larger than and equal to the threshold K2, the application needs operation to some extent, and the processing mode is in the quad-core mode. When the CPU takes a share of 25% to 75% (i.e., larger than the threshold K1 and smaller than the threshold K2), the processing mode is in the dual-core mode. Especially, both of the number and the value of the threshold can be decided by the user based on the performance of the platform.

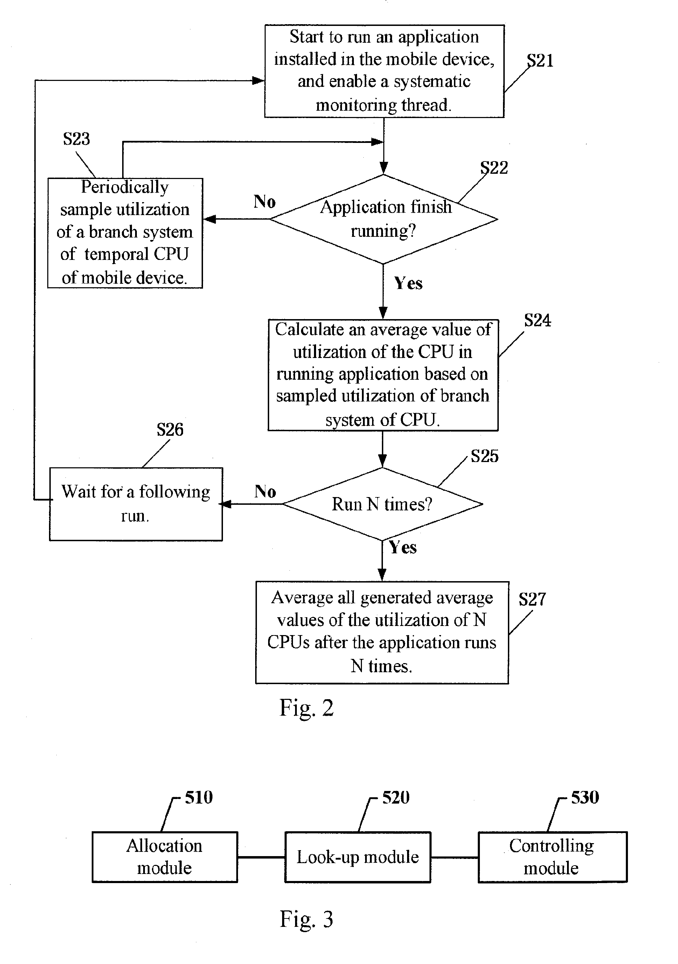

A count of utilization of the system in the running application in this embodiment is shown in Fig. 2. Steps are as follows:
Step S21: Start to run an application installed in the mobile device, and enable a systematic monitoring thread.
Step S22: Monitor the application to finish running. If the application finishes running, run S24; otherwise, run S23.
Step S23: Take a sample of utilization of a branch system of the temporal CPU which the mobile device corresponds to at intervals; return to Step S22.
Step S24: Calculate an average value of the utilization of the CPU in the running application based on the sampled utilization of the branch system of the CPU. That is, a plurality of sampled utilizations of the branch system of the CPU is equally dealt with when the application stops running. An average value of the utilization of a responding CPU is generated whenever the application runs.
Step S25: Decide if the application has run N times. If the application has run N times, run S27; otherwise, run S26.
Step S26: Wait for a following run; return to Step S21.
Step S27: Average all generated average values of the utilization of N CPUs after the application runs N times. The utilization of the system of the running application is obtained and is labeled as "V." Judge what processing mode is best for the application. The concrete method for judging the best processing mode is as follows:

When V<=K1 stands, judge that the application is suitable for adopting the mono-core mode;

When V>=K2 stands, judge that the application is suitable for adopting the quad-core mode.

When V>K1 and V < K2 both stand, judge that the application is suitable for adopting the dual-core mode.

Update the table based on the results of judgment. Take a quad-core processor for example. Fig. 1 shows a table at default.

**Table 1**

| Application | Number of Cores |
|---|---|
| Web Browser | 4 |
| Racing Game | 4 |
| E-mail | 4 |
| Short Message | 4 |

Table 2 shows an updated table after the application runs N times.

**Table 2**

| Application | Number of Cores |
|---|---|
| Web Browser | 2 |
| Racing Game | 4 |
| E-mail | 1 |
| Short Message | 1 |

The system automatically controls the processor to operate in a corresponding mode based on the updated table when an application starts to run. The concrete process is mentioned below.
Step 1: The application becomes a current application when the user starts to run an application or a user switches an application from a task to a dormant application. The processing mode of the multi-core processor needs to change with variations of the current application.
Step 2: Look up a parameter of the current application in the table for the multi-core processor and allocate the processing mode of the processor again based on the API for the call system before the current application is loaded. For example, the system finds that the number of cores which the application of the browser corresponds to is two when the user opens the browser. The processor operates in the dual-core mode under the control of the call system with API-SetCores(2).
Step 3: The current application starts to be loaded to the memory after the processing mode of the processor is successfully switched. If the application newly runs, copy the application from a program memory and save in an operating memory. If the application is dormant, direct a newly operating pointer to an operating address where the application has interrupted previously in the operating memory.
Step 4: The process in the new processing mode runs every instruction from the current process. Up to now, the multi-core processor successfully adopts different processing modes according to different numbers of cores for different applications.

To sum up, the embodiment of the present invention proposes the method for automatically adapting an application to a suitable multicore processing mode, a simple table, and a processing mode capable of automatically analyzing the loading of the system when each of the applications is running and then allocating a suitable processing mode to each of the applications. The present invention makes it possible that the cores in the processor are allocated according to demands so power consumption generated by the mobile device with a multi-core processor is successfully optimized.

The present embodiment also provides a mobile device which adopts the above-mentioned method for automatically adapting an application to a suitable multicore processing mode. As shown in Fig. 3, the mobile device provided by the present invention comprises an allocation module 510, a look-up module 520, and a controlling module 530.

The allocation module 510 is used for automatically allocating a suitable processing mode to each corresponding application in the multi-core processor installed in the mobile device and storing a one-to-one relationship between each of the applications and each of the corresponding processing modes to a preformed table. Details of the allocation module 510 can refer to the above-mentioned embodiment.

The look-up module 520 is used for looking up the table when one of the applications in the mobile device starts to run and obtaining a processing mode which the currently running application corresponds to based on the one-to-one relationship. Details of the look-up module 520 can refer to the above-mentioned embodiment.

The controlling module 530 is used for controlling the mobile device to be automatically switched to the processing mode which the currently running application corresponds to. After the mobile device is successfully switched, load the currently running application. Details of the controlling module 530 can refer to the above-mentioned embodiment.

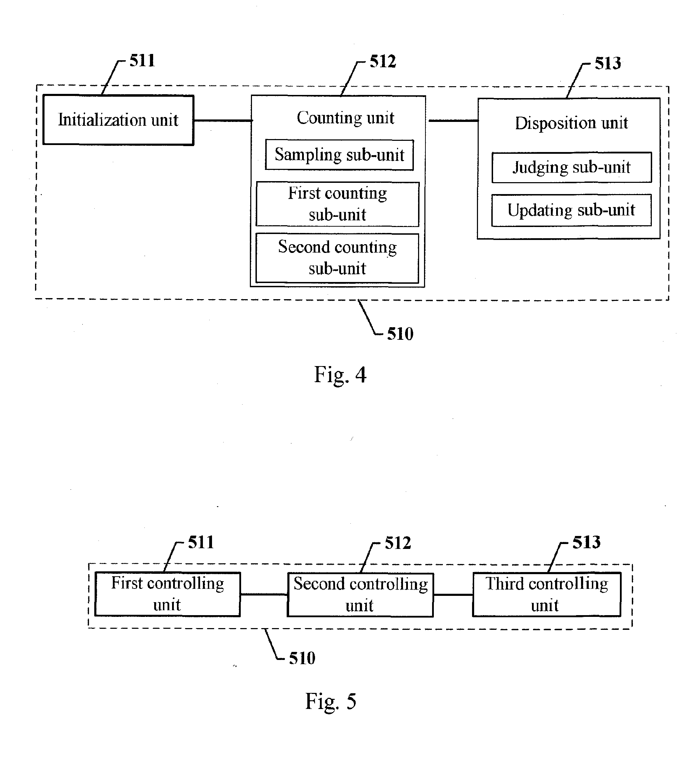

Preferably, the allocation module 510 comprises an initialization unit 511, a counting unit 512, and a disposition unit 513, as shown in Fig. 4.

The initialization unit 511 is used for storing the one-to-one relationship between each of the applications and each of the corresponding processing modes at default to the preformed table. Details of the initialization unit 511 can refer to the above-mentioned embodiment.

The counting unit 512 is used for automatically counting the utilization of each of the running applications. Details of the accounting unit 512 can refer to the above-mentioned embodiment.

The disposition unit 513 is used for judging which processing mode is suitable for each of the applications based on the result of counting and updating the table based on the result of judgment correspondingly. Details of the disposition unit 513 can refer to the above-mentioned embodiment.

The counting unit 512 also comprises a sampling sub-unit, a first counting sub-unit, and a second counting sub-unit.

The sampling sub-unit is used for taking a sample of utilization of the temporal CPU which the mobile device corresponds to at predetermined intervals when the application installed in the mobile device runs.

The first counting sub-unit is used for calculating an average value of the utilization of the CPU in the running application based on the sampled utilization of the temporal CPU which the mobile device corresponds to.

The second counting sub-unit is used for counting all generated average values of the utilization of the CPU after the application runs N times for obtaining the utilization of the system in the running application.

The disposition unit 513 also comprises a judging sub-unit and a updating sub-unit.

The judging sub-unit is used for comparing the utilization of the system when each of the applications runs with the predetermined threshold and determining that each of the applications is suitable for which processing mode.

The updating sub-unit is used for correspondingly adjusting the processing mode corresponding to the application based on the result of adjustment of the judging sub-unit and updating the table.

Preferably, the controlling module 530 comprises a first controlling unit 531, a second controlling unit 532, and a third controlling unit 533, as shown in Fig. 5.

The first controlling unit 531 is used for forcing the mobile device to automatically switch to be in the mono-core mode when the processing mode which the currently running application corresponds to stays in the mono-core mode. Details of the first controlling unit 531 can refer to the above-mentioned embodiment.

The second controlling unit 532 is used for forcing the mobile device to automatically switch to be in the multi-core mode when the processing mode which the currently running application corresponds to stays in the multi-core mode. Details of the second controlling unit 532 can refer to the above-mentioned embodiment.

The third controlling unit 533 is used for controlling the mobile device comprising the memory where the current application is loaded. Details of the third controlling unit 533 can refer to the above-mentioned embodiment.

In sum, the present invention proposes a method for automatically adapting an application to a suitable multicore processing mode and a mobile device adopting the method. The utilization of the system in the running application is counted. The application automatically matches a suitable processing mode. The multi-core processor to the application is asked to operate in a mode with a corresponding number of cores. The present invention makes it possible that the cores in the processor are allocated according to demands so the processing speed of the mobile device and power consumption generated by the mobile device are balanced. Power consumption generated by the mobile device with the multi-core processor is successfully optimized. The mobile device is also equipped with new functions. The processor automatically switches in the mono-core mode (more economical) and in the multi-core mode (more highly-performed) according to different applications. The processing mode of each of the applications is automatically optimized. The process of the system operates and finishes automatically as well. Since the user does not need to operate manually, it is convenient for the user.

The embodiment proposes the mobile device equipped with the application which automatically matches the suitable multicore processing mode. The mobile device is formed in a terminal. The terminal may be a calculator, a tablet PC, a touchable cellphone, etc. The concept of the mobile device is the same as that of the method for automatically adapting the application to the suitable multicore processing mode. The mobile device equipped with the application which automatically matches the suitable multicore processing mode can adopt any method proposed in the embodiments. Details of the mobile device and the method can refer to the above-mentioned embodiments introducing that the application automatically matches the suitable multicore processing mode. There will no further elaboration hereafter.

To further elaborate, the realization of the method for automatically adapting an application to a suitable multicore processing mode is understood by those skilled in the art partially or totally. The method can be realized by controlling related hardware through computing processes. The computing processes can be stored in a storage medium which can be read by computers. The storage medium can be a terminal. The computing processes are executed by at least one processor. Steps of execution may comprise the steps mentioned in the embodiments of the present invention. The storage medium may be a magnetic disc, or a compact disc, a read-only memory (ROM), or a random access memory (RAM).

For the application automatically adapting the mobile device in the multicore processing mode, the modules for different functions are centered in a processing chip. Or, each of the modules is disposed independently and physically. Or, two or more than two modules are centered in a module. The centered modules can be realized in both of hardware and software. Once the centered modules are realized in software and used or sold as an independent product, the centered modules are stored in a storage medium which can be read by a calculator. The storage medium may be a read-only storage device, a magnetic disc, or a compact disc. The present invention has been described with reference to certain preferred and alternative embodiments which are intended to be exemplary only and not limited to the full scope of the present invention as set forth in the appended claims.

## Claims

1. A method for automatically adapting an application to a suitable multicore processing mode, comprising:
corresponding to a processing mode of a processor based on an utilization of a system in a running application, and storing a one-to-one relationship between the application and the corresponding processing mode of the processor to a preformed table;
looking up the processing mode in the table when the application is found to run in a mobile device, and the processing mode of the processor comprising a mono-core mode and a multi-core mode;
controlling the mobile device to switch to the mono-core mode if the processing mode of the processor which the application corresponds to is the mono-core mode and loading the application to a memory of the mobile device; and
controlling the mobile device to switch to the multi-core mode if the processing mode of the processor which the application corresponds to is the multi-core mode and loading the application to the memory of the mobile device.

2. The method as claimed in claim 1, wherein steps of storing the one-to-one relationship between the application and the corresponding processing mode of the processor to the table comprise:
storing the one-to-one relationship between the application and the processing mode of the processor at default to the table in advance;
counting the utilization of the system in the running application when the application is detected to be running in the mobile device; and
corresponding to a processing mode of the processor based on the utilization of the system in the running application, and updating the table.

3. The method as claimed in claim 2, wherein steps of counting the utilization of the system in the running application comprise:
obtaining the utilization of at least two branch systems at predetermined intervals when the application is detected to be running in the mobile device;
generating an average value of the utilization based on the obtained utilization of the branch system when the application is detected to stop; and
generating the utilization of the system in the running application based on the average value of the utilization as the application runs each time and the predetermined time after the application is detected to run for a predetermined time.

4. The method as claimed in claim 3, wherein steps of corresponding to the application to a processing mode of the processor based on the utilization of the system comprise:
comparing the utilization of the system in the running application with a predetermined threshold and determining that the processing mode corresponds to the application.

5. The method as claimed in claim 4, wherein steps of corresponding to the application to a processing mode of the processor based on the utilization of the system comprises:
predetermining the threshold;
the processing mode of the processor corresponding to the application is the mono-core mode if the utilization of the system in the running application is smaller than or equal to the threshold, and updating the processing mode of the processor corresponding to the application in the table to the mono-core mode; and
the processing mode of the processor corresponding to the application is the multi-core mode when the utilization of the system in the running application is larger than the threshold, and updating the processing mode of the processor corresponding to the application in the table to the multi-core mode.

6. A method for automatically adapting an application to a suitable multicore processing mode, comprising:
allocating a corresponding processing mode of the processor to the application in a mobile device in advance, and storing a one-to-one relationship between the application and the corresponding processing mode of the processor to a preformed table;
looking up the processing mode of the processor which the application corresponds to when the application runs in the mobile device; and
controlling the mobile device to switch to the processing mode of the processor which the application corresponds to based on the looked-up processing mode of the processor which the application corresponds to, and loading the application after the switch wherein the processing mode of the processor corresponds to different numbers of cores in the processor.

7. The method as claimed in claim 6, wherein steps of allocating the application to the corresponding processing mode of the processor in advance comprise:
storing the one-to-one relationship between the application and the corresponding processing mode of the processor at default to the table in advance;
counting an utilization of a system in the running application when the application runs in the mobile device; and
corresponding to a processing mode of the processor based on the utilization of the system in the running application, and updating the table.

8. The method as claimed in claim 6, wherein steps of controlling the mobile device to switch based on the processing mode of the processor which the application corresponds to comprise:
controlling the mobile device to switch to be in a mono-core mode if the processing mode of the processor which the application corresponds to is in the mono-core mode, and loading the application to a memory of the mobile device after the switch; and
controlling the mobile device to switch to be in a multi-core mode if the processing mode of the processor which the application corresponds to is in the multi-core mode, and loading the application to the memory of the mobile device after the switch.

9. The method as claimed in claim 7, wherein steps of counting the utilization of the system in the running application comprise:
obtaining at least two utilizations of a branch system based on predetermined intervals when the application runs in the mobile device;
generating an average value of the utilization based on the utilization of the obtained branch system when the application stops running; and
generating the utilization of the system when the application runs based on the average value of the utilization each time the application runs and the predetermined times after the application runs for predetermined times.

10. The method as claimed in claim 9, wherein a step of corresponding to a processing mode of the processor based on the utilization of the system comprises:
comparing the utilization of the system in the running application with a predetermined threshold and determining that the processing mode corresponds to the application.

11. The method as claimed in claim 10, wherein a step of corresponding to a processing mode of the processor based on the utilization of the system comprises:
predetermining the threshold;
the processing mode of the processor corresponding to the application is the mono-core mode if the utilization of the system in the running application is smaller than or equal to the threshold, and updating the processing mode of the processor corresponding to the application in the table to the mono-core mode; and
the processing mode of the processor corresponding to the application is the multi-core mode when the utilization of the system in the running application is larger than the threshold, and updating the processing mode of the processor corresponding to the application in the table to the multi-core mode.

12. A mobile device for automatically adapting an application to a suitable multicore processing mode, comprising:
an allocation module, for allocating a corresponding processing mode of the processor to the application in a mobile device in advance, and storing a one-to-one relationship between the application and the corresponding processing mode of the processor to a preformed table;
a look-up module, for looking up the processing mode of the processor which the application corresponds to when the application runs in the mobile device; and
a controlling module, for controlling the mobile device to switch to the processing mode of the processor which the application corresponds to based on the looked-up processing mode of the processor which the application corresponds to, and loading the application after the switch wherein the processing mode of the processor corresponds to different numbers of cores in the processor.

13. The mobile device as claimed in claim 12, wherein the allocation module comprises:
an initialization unit, for storing the one-to-one relationship between the application and the corresponding processing mode of the processor at default to the table in advance;
a counting unit, for counting an utilization of a system in the running application when the application runs in the mobile device; and
a disposition unit, for corresponding to a processing mode of the processor based on the utilization of the system in the running application, and updating the table.

14. The mobile device as claimed in claim 12, wherein the controlling module comprises:
a first controlling unit, for controlling the mobile device to switch to be in a mono-core mode if the processing mode of the processor which the application corresponds to is in the mono-core mode; and
a second controlling unit, for controlling the mobile device to switch to be in a multi-core mode if the processing mode of the processor which the application corresponds to is in the multi-core mode, and; and
a third controlling unit, for loading the application to the memory of the mobile device after the switch.

15. The mobile device as claimed in claim 13, wherein the counting module comprises:
a sampling sub-unit, for obtaining at least two utilizations of a branch system based on predetermined intervals when the application runs in the mobile device;
a first counting sub-unit, for generating an average value of the utilization based on the utilization of the obtained branch system when the application stops running; and
a second counting sub-unit, for generating the utilization of the system when the application runs based on the average value of the utilization each time the application runs and the predetermined times after the application runs for predetermined times.

16. The mobile device as claimed in claim 13, wherein the disposition unit comprises a judging sub-unit and a updating sub-unit;
the judging sub-unit is used for comparing the utilization of the system in the running application with a predetermined threshold and determining that the processing mode corresponds to the application;
the processing mode of the processor corresponding to the application is the mono-core mode if the utilization of the system in the running application is smaller than or equal to the threshold;
the processing mode of the processor corresponding to the application is the multi-core mode when the utilization of the system in the running application is larger than the threshold;
the updating sub-unit is used for updating the processing mode of the processor corresponding to the application based on a result of the judging sub-unit and updating the table.

17. A storage medium, storing a plurality of instructions executable by a processor to perform operations of:
allocating an application to a corresponding processing mode of the processor in advance and storing a one-to-one relationship between the application and the corresponding processing mode of the processor to a preformed table;
looking up the processing mode of the processor which the application corresponds to when the application runs in a mobile device; and
controlling the mobile device to switch to the processing mode of the processor which the application corresponds to based on the looked-up processing mode of the processor which the application corresponds to, loading the application after the switch, and the processing mode of the processor corresponding to different numbers of cores in the processor.

18. The storage medium as claimed in claim 17, wherein the processor in the storage medium processes the instructions and the processor performs the operations of:
storing the one-to-one relationship between the application and the processing mode of the processor at default to the table in advance when the application is allocated to the corresponding processing mode of the processor in advance;
counting an utilization of a system in the running application when the application runs in the mobile device; and
corresponding to a processing mode of the processor based on the utilization of the system in the running application, and updating the table.

19. The storage medium as claimed in claim 17, wherein the processor in the storage medium processes the instructions and the processor performs the operations of:
controlling the mobile device to switch to be in a mono-core mode if the processing mode of the processor which the application corresponds to is in the mono-core mode according to the processing mode of the process which the application corresponds to controlling the mobile device to switch, and loading the application to a memory of the mobile device after the switch; and
controlling the mobile device to switch to be in a multi-core mode if the processing mode of the processor which the application corresponds to is in the multi-core mode, and loading the application to the memory of the mobile device after the switch.

20. The storage medium as claimed in claim 19, wherein the processor in the storage medium processes the instructions and the processor performs the operations of:
obtaining the utilization of at least two branch systems at predetermined intervals when the application is detected to be running in the mobile device when the utilization of the system in the running application is counted;
generating an average value of the utilization based on the utilization of the obtained branch system when the application stops running; and
generating the utilization of the system when the application runs based on the average value of the utilization each time the application runs and the predetermined times after the application runs for predetermined times.
